(19) Europäisches Patentamt

European Patent Office

Office européen des brevets

(11) EP 1 252 095 B1

(12) **EUROPEAN PATENT SPECIFICATION**

(45) Date of publication and mention
of the grant of the patent:
**10.11.2004 Bulletin 2004/46**

(51) Int Cl.[7]: **C01B 33/145**, C01B 33/149,
C09C 1/30, C08K 3/36

(21) Application number: **01908439.1**

(22) Date of filing: **29.01.2001**

(86) International application number:
**PCT/NL2001/000063**

(87) International publication number:
**WO 2001/055030 (02.08.2001 Gazette 2001/31)**

(54) **METHOD FOR MANUFACTURING HYDROPHOBIC COLLOIDAL SILICA**

VERFAHREN ZUR HERSTELLUNG VON HYDROPHOBER KOLLOIDALER KIESELSÄURE

PROCEDE DE FABRICATION DE SILICE COLLOIDALE HYDROPHOBE

(84) Designated Contracting States:
**AT BE CH CY DE DK ES FI FR GB GR IE IT LI LU
MC NL PT SE TR**

(30) Priority: **28.01.2000 JP 2000024767**

(43) Date of publication of application:
**30.10.2002 Bulletin 2002/44**

(73) Proprietors:
• **DSM IP Assets B.V.
6411 TE Heerlen (NL)**
• **JSR Corporation
Tokyo 104-0045 (JP)**
• **Japan Fine Coatings Co., Ltd.
Tokyo 104-8410 (JP)**

(72) Inventors:
• **ERIYAMA, Yuichi
Tsukuba Ibaraki 305-0061 (JP)**
• **TAKAHASHI, Atsuya
Tsuchiuri-shi Ibaraki 300-1216 (JP)**
• **NISHIWAKI, Isao
Toride Ibaraki 302-0004 (JP)**
• **UKACHI, Takashi
Ushiku Ibaraki 300-12 (JP)**

(74) Representative:
**Hoogendam, Gerrie Christine et al
DSM Intellectual Property
Office Geleen
P.O. Box 9
6160 MA Geleen (NL)**

(56) References cited:
**EP-A- 0 475 132       EP-A- 0 900 829
EP-A- 0 982 268       US-A- 5 013 585**

• **DATABASE WPI Section Ch, Week 198340
Derwent Publications Ltd., London, GB; Class
E11, AN 1983-780575 XP002168260 & JP 58
145614 A (SHOKUBAI KASEI KOGYO KK) , 30
August 1983 (1983-08-30)**

## Description

The present invention relates to a method for manufacturing hydrophobic colloidal silica, the silica dispersion in a hydrophobic organic solvent or resin and the use of the colloidal silica in organic hydrophobic solvents and resins.

Several manufacturing methods are known in the art for preparing colloidal silica in which silica particles are dispersed in an organic solvent. For example, the following methods are disclosed.

A first method (1) describes the manufacturing of colloidal silica dispersed in methanol by removing a metal ion in an aqueous silica sol by an ion exchanging method, mixing the aqueous silica sol with methanol and then dehydrating the mixture by concentration using an ultra filtration method (Japanese Patent Application Laid-open No. 167813/1990). The colloidal silica obtained by this process is unstable in a hydrophobic organic solvent or an organic resin.

A second method (2) describes the manufacturing of an hydrophobic organosilica sol which comprises neutralizing a dispersion liquid comprising hydrophilic colloidal silica, a silylation reagent, a hydrophobic organic solvent, water, and alcohol, heating and aging the dispersion liquid and replacing the solvent by distillation (Japanese Patent Application Laid-open No. 43319/1999). This method requires heating at a high temperature for a long period of time for aging and replacing the solvent. Moreover, an alkaline metal ion, which causes corrosion of metal wiring in electronic materials, cannot be removed by replacing the solvent by distillation.

A third method (3) describes the manufacturing of a silica sol dispersed in an organic solvent which comprises mixing silica sol dispersed in water with an organic solvent and dehydrating the mixture by ultra filtration (Japanese Patent Application Laid-open No. 8614/1984). The silica sol obtained by method (3) does have the desired long-term dispersion stability when using a hydrophobic organic solvent as a dispersion medium.

The present invention has been achieved in view of the above problems in the prior art. Specifically, an object of the present invention is to provide a method for manufacturing colloidal silica that exhibits good dispersibility in an organic solvent, an organic resin, a paint containing an organic solvent or resin, is stable for a long period of time in a medium containing a hydrophobic organic solvent as a major component and has a small metal ion impurity content under mild conditions.

The present inventors have conducted extensive studies to achieve the above object. As a result, the present inventors have found that the above object can be achieved by preparing hydrophobic colloidal silica by a method comprising the steps:

(a) taking a colloidal silica dispersed in an aqueous dispersant
(b) replacing 80-99,9% of the aqueous dispersant with one or more hydrophilic organic solvent(s)
(c) preparing hydrophobic colloidal silica by reacting the colloidal silica with an hydrophobizing agent and
(d) replacing the liquid phase of the dispersion comprising the organic hydrophilic solvent with one or more hydrophobic organic solvent(s) to obtain hydrophobic colloidal silica dispersed in a hydrophobic organic solvent.

Detailed description of the invention.

Preferred embodiments of the present invention will be described in detail below. In the present invention an aqueous dispersant refers to a dispersant that contains water as the main component. A hydrophilic organic solvent refers to an organic solvent which is able to contain dissolved water to an amount of at least 12 wt% at 20 °C and preferably can be uniformly mixed with water at 20°C in any optional proportion. A hydrophobic organic solvent refers to an organic solvent that is not able to contain dissolved water in an amount of more than 12 wt% at 20°C. The organic solvents may comprise one single organic solvent or a mixture of organic solvents.

Colloidal silica is commonly kept as a stable dispersion in an aqueous solution. As examples of colloidal silica dispersed in an aqueous solvent used in the present invention, colloidal silica with a number average particle diameter, determined by a dynamic light scattering method, of 1-100 nm, solid content of 10-40 wt%, and pH of 2.0-6.5 is preferable. Examples of commercially available products include Snowtex O (manufactured by Nissan Chemical Industries, Ltd., number average particle diameter determined by dynamic light scattering method: 7 nm, solid content: 20 wt%, pH: 2.7), Snowtex OL (manufactured by Nissan Chemical Industries, Ltd., number average particle diameter determined by dynamic light scattering method: 15 nm, solid content: 20 wt%, pH: 2.5), and the like

During the step (b) of the present invention, 80-99,9% of the aqueous dispersant is replaced by a hydrophilic organic solvent.

Preferably 90 to 99.9 % of the aqueous dispersant is replaced by a hydrophilic solvent. Preferably the replacement of the aqueous dispersant is performed using an ultra filter membrane. Specifically, a container equipped with a pressure gauge, flow meter, ultra filter membrane, and circulating pump is charged with colloidal silica dispersed in water. The dispersant is preferably replaced using the ultra filter membrane while circulating the colloidal silica at a predetermined temperature and a predetermined circulation flow rate (or linear velocity). Preferably a part of the dispersant is removed before replacement with the organic hydrophilic solvent in a batch wise concentration step (by for example filtering or precipitation). The dispersant is replaced by diluting with a predetermined amount of a hydrophilic organic solvent, to prepare colloidal silica dispersed in a hydrophilic organic solvent with a solid content of preferably 20-50-wt% and a water content determined by the Karl Fischer method of preferably 0.1-10 wt%. If the water content is less than 0.1 wt%, viscosity may increase during storage. If the water content exceeds 10 wt%, a reaction with the hydrophobizing agent as described later may become nonuniform. The dilution step may be carried out batch wise and be repeated as many times as necessary, or it may be carried out continuously together with the removal of solvent.

The concentration and dilution may be carried out at the same time (dilute during concentration) or separately depending on the operation method (for example, a batch method or a continuous method). It is preferable to use a method of performing concentration and dilution at the same time, because in that case the amount of the dilution solvent to be used in the process of the invention is small. The amount of hydrophilic organic solvent used for dilution is preferably 1-10 kg for 1 kg of water of aqueous colloidal silica.

The aqueous dispersant is preferably replaced at a temperature lower than the boiling point of the hydrophilic organic solvent. When using methanol, which is the preferable hydrophilic organic solvent, the temperature is preferably 40-60°C. The circulation flow rate of the solvent converted to the linear velocity in the ultra filter membrane during operation is preferably 2.0-4.5 m/second, and still more preferably 3.0-4.0 m/second, for efficiently replacing the solvent in the ultra filter membrane and for ensuring safety during operation. There are no specific limitations to the ultra filter membrane used in this step insofar as the ultra filter membrane does not cause problems due to pressure, temperature, and an organic solvent used during the operation. It is preferable to use an ultra filter membrane made of ceramics, which is not affected by temperature and pressure and exhibits superior solvent resistance.

In the present invention, preferably an ultra filter membrane with a pore diameter smaller than the particle diameter of the colloidal silica is used. The fractional molecular weight, which is used as a substitute value for a pore diameter in the art, of the ultra filter membrane is preferably 3,000-1,000,000, still more preferably 30,000-500,000, and particularly preferably 100,000-200,000. Although there are no specific limitations to the shape of the ultra filter membrane, it is preferable to use a cylindrical ultra filter membrane which exhibits a high permeation flow rate and exhibits almost no clogging.

Examples of hydrophilic organic solvent are alcohols such as methanol, ethanol, isopropyl alcohol, butanol, and ethylene glycol monomethyl ether, amides such as dimethylformamide and dimethylacetamide. Of these, alcohols are preferable, with methanol being particularly preferable. These hydrophilic organic solvents may be used either individually or in combinations of two or more.

The hydrophobic colloidal silica is prepared by mixing and reacting colloidal silica dispersed in a solvent that contains a hydrophilic organic solvent as a major solvent with a hydrophobizing agent.

(2) Hydrophobizing agent

The hydrophobizing agent used in the present invention comprises a hydrolysable silicon compound having at least one alkoxy group in the molecule or a hydrolyzate thereof.

The compounds shown by the formula (1) can be given as preferred examples of such a hydrolysable silicon compound.

$$(R^1O)_m(R^2)_{3-m}Si\text{-}(\text{-}O\text{-}SiMe_2\text{-})_p\text{-}(O)_q\text{-}R^3 \tag{1}$$

wherein $R^1$ represents an alkyl group having 1-4 carbon atoms, $R^2$ and $R^3$ individually represent an alkyl group having 1-12 carbon atoms, Me represents a methyl group, m is an integer from 0 to 3, p is an integer from 0 to 50, q is 0 or 1 and m+q are between 1 and 4.

Specific examples include trimethylmethoxysilane, tributylmethoxysilane, dimethyldimethoxysilane, dibutyldimethoxysilane, methyltrimethoxysilane, butyltrimethoxysilane, octyltrimethoxysilane, dodecyltrimethoxysilane, 1,1,1-trimethoxy-2,2,2-trimethyl-disilane, hexamethyl-1,3-disiloxane, 1,1,1-trimethoxy-3,3,3-trimethyl-1,3-disiloxane, $\alpha$-trimethylsilyl-$\omega$-dimethylmethoxysilyl-polydimethylsiloxane and $\alpha$-trimethylsilyl-$\omega$-trimethoxysilyl-polydimethylsiloxanehexamethyl-1,3-disilazane. Of these compounds, silicon compounds containing one alkyl group in the molecule, for example trimethylmethoxysilane, tributylmethoxysilane, and $\alpha$-trimethylsilyl-$\omega$-dimethylmethoxysilyl-polydimethylsiloxane are preferable.

Most preferable are silicon compounds of which the boiling point at ordinary pressure is 150°C or less, for example trimethylmethoxysilane.

The hydrophobizing agent used in the present invention may also be a hydrolyzate of the above hydrolysable silicon compound.

The reaction between the hydrophobizing agent and the colloidal silica preferably is carried out by mixing the hydrophobizing agent in an amount of 0.1-100 parts by weight, and preferably 1-10 parts by weight for 100 parts by weight of the silica included in the colloidal silica, and allowing the hydrophobizing agent to react at a temperature of 20°C or more and equal to or lower than the boiling point of the hydrophilic organic solvent, preferably at 20-60°C for 0.5-24 hours.

The reaction mechanism in this step is not fully clarified, but it is assumed as follows. It is assumed that the polar silanol groups, present on the surface of the colloidal silica dispersed in an aqueous dispersant (such as for example water) or in a hydrophilic organic solvent (that still contains a small amount of water) contribute to the stabilization of the dispersion via hydrogen bonding. The hydrophobizing agent used in the present invention forms a chemical bond with these silanol groups through a condensation reaction, whereby the surface of the silica is coated with hydrophobic organic groups. As a result, the silanol group concentration on the surface of the silica decreases, and the number of hydrophobic groups increases. Therefore, silica particles having a hydrophobic surface and exhibiting dispersion stability in the hydrophilic organic solvent and in hydrophobic organic solvents are formed. The silanol group concentration on the surface of the colloidal silica dispersed in the hydrophilic organic solvent is preferably from $2.5 \times 10^{-5}$ to $5.0 \times 10^{-5}$ mol/g. Silica dispersions that already contain these amounts of silanol groups at the surface may also be used in the method of the present invention. A suitable example of a commercial available product is a methanol silica sol manufactured by Nissan Chemical Industries, Ltd. The silanol group concentration on the silica particles obtained by the reaction with the hydrophobizing agent in this step is preferably reduced to a concentration from $1.5 \times 10^{-5}$ to $2.5 \times 10^{-5}$ mol/g by mixing with the hydrophobizing agent. If the silanol group concentration exceeds $2.5 \times 10^{-5}$ mol/g, stability in the hydrophobic organic solvent may decrease. If the concentration is less than $1.5 \times 10^{-5}$ mol/g, stability in the hydrophilic organic solvent may decrease.

After reacting the hydrophobic colloidal silica with a hydrophobizing agent, the mixture containing the hydrophilic organic solvent, aqueous dispersant and reaction components of the hydrophobic colloidal silica dispersion is essentially replaced by one or more hydrophobic organic solvent(s). Preferably the replacement of the hydrophilic organic solvent is carried out by using an ultra filter membrane in the same way as described before. The solvent is replaced preferably at the boiling point of the hydrophobic organic solvent or lower, and still more preferably at 40-80°C.

The final hydrophobic colloidal silica in the hydrophobic organic solvent(s) preferably contains 0.1-10 wt% water and preferably 0.1-10 wt% methanol, and still more preferably 0.1-5-wt% methanol. If the methanol content is less than 0.1 wt%, viscosity may increase during preparation or storage. If the methanol content exceeds 10 wt%, dispersibility and uniformity in a hydrophobic organic material may decrease. The water content in the hydrophobic colloidal silica dispersed in the hydrophobic organic solvent is preferably 5 wt% or less, and still more preferably 2 wt% or less. If the water content exceeds 5 wt%, viscosity may increase during storage.

Examples of suitable hydrophobic organic solvent(s) are ketones (for example methyl ethyl ketone, methyl isobutyl ketone, and cyclohexanone); esters (for example ethyl acetate and butyl acetate); unsaturated acrylic esters (for example butyl acrylate, methyl methacrylate, hexamethylene diacrylate, and trimethylolpropane triacrylate) aromatic hydrocarbons, (for example toluene and xylene) and ethers (for example dibutyl ether). Of these solvents. ketones are preferable, with methyl ethyl ketone and methyl isobutyl ketone being particularly preferable. These hydrophobic organic solvents may be used either individually or in combinations of two or more. Moreover, a mixture of the hydrophobic organic solvent and the hydrophilic organic solvent can also be used. The invention also relates to resin compositions that may comprise radiation curable components. These radiation curable components may be either radically curable or cationically curable components. Examples of radically curable components are compounds containing at least one polymerizable unsaturated group. Either polyunsaturated organic compounds containing two or more polymerizable unsaturated groups and/or monounsaturated organic compounds containing one polymerizable unsaturated group can be used as the polymerizable unsaturated compound. Examples of such components are (meth)acrylates and vinylethers. Examples of cationically curable components are epoxy compounds. The dispersions may be used in different applications like (hard)coatings, as adhesives, in molding and in stereolithography. Use of the dispersions of the present invention in resin compositions gives many advantages: for example better mechanical properties and improved storage stability of the resin compositions.

The colloidal silica may also be modified to contain polymerizable groups in order to make the dispersion co reactive with the radiation curable components of the resin compositions. Examples of ways to modify the silica particles have been published in WO97/12942, which is incorporated herein by reference.

Examples

The present invention will be described in more detail by examples, which should not be construed as limiting the present invention. In the following examples, "parts" and "%" respectively refer to "parts by weight" and "wt%" unless otherwise indicated.

In the present invention, "solid content" refers to the content of components excluding volatile components such as solvents from the dispersion liquid, specifically, "solid content" refers to the content of a residue (non-volatile components) obtained by drying the dispersion liquid on a hot plate at 175°C for one hour.

The average particle diameter used in this application refers to an average particle diameter of a sample solution determined by a dynamic light scattering method using the analyser: laser particle analyser system PAR-IIIs manufactured by Otsuka Electronics Co., Ltd. Analysis conditions are: light source; He-Ne laser 5 mW, measurement angle; 90°)

(1) Preparation of colloidal silica dispersed in a solvent, which contains a hydrophilic organic solvent as a major solvent

Preparation Example 1 illustrates an example of the preparation of colloidal silica dispersed in a solvent, which contains a hydrophilic organic solvent as a major solvent.

Preparation Example 1

A tank was charged with 30 kg of colloidal silica dispersed in water ("Snowtex-O" manufactured by Nissan Chemical Industries, Ltd., solid content: 20 wt%, pH: 2.7, specific surface area measured by BET method: 226 $m^2/g$, silanol group concentration on silica particles determined by methyl red adsorption method: $4.1 \times 10^{-5}$ mol/g, metal content in solvent determined by atomic absorption method: Na; 4.6 ppm, Ca; 0.013 ppm, K; 0.011 ppm). The colloidal silica was concentrated at 50°C at a circulation flow rate of 50 l/minute and pressure of 1 $kg/cm^2$ using an ultra filter membrane module (manufactured by Tri Tec Corporation) and an ultra filter membrane made of alumina ("Ceramic UF Element" manufactured by NGK Insulators, Ltd., specification: 4 mmΦ, 19 pores, length; 1 m, fractional molecular weight = 150,000, membrane area = 0.24 $m^2$). After 30 minutes, 10 kg of filtrate was discharged to obtain a residue with a solid content of 30-wt%. The average permeation flow rate (membrane permeation weight per unit area of ultra filter membrane and unit time) before concentration was 90 $kg/m^2$/hour. After concentration, the average permeation flow rate was 55 $kg/m^2$/hour. The number average particle diameter determined by a dynamic light scattering method before and after concentration was 11 nm.

After the addition of 14 kg of methanol to the above colloidal silica, the mixture was then concentrated at 50°C at a circulation flow rate of 50 l/minute and pressure of 1 $kg/cm^2$ using the above ultra filter membrane module and ultra filter membrane to discharge 14 kg of filtrate. This step was repeated six times to prepare 20 kg of colloidal silica dispersed in methanol with a solid content of 30 wt%, water content determined by the Karl Fischer method of 1.5 wt%, and number average particle diameter determined by a dynamic light scattering method of 11 nm. The average permeation flow rate of six times of operation was 60 $kg/m^2$/hour, requiring six hours for the operation to complete. The specific surface area of the resulting colloidal silica dispersed in methanol measured by the BET method was 237 $m^2/g$. The silently group concentration on the silica particles determined by a methyl red adsorption method was $3.5 \times 10^{-5}$ mol/g.

(2) Preparation of hydrophobic colloidal silica

Example 1 illustrates an example of the preparation of hydrophobic colloidal silica.

Example 1

0.6 kg of trimethylmethoxysilane (manufactured by Toray-Dow Coming Silicone Co. Ltd.) was added to 20 kg of the colloidal silica dispersed in methanol prepared in the Preparation Example 1. The mixture was then stirred at 60°C for three hours while heating. The number average particle diameter determined by a dynamic light scattering method was 11 nm, which was the same value as that before stirring. The specific surface area of the resulting hydrophobic colloidal silica dispersed in methanol measured by a BET method was 240 $m^2/g$. The silanol group concentration on the silica particles determined by a methyl red adsorption method was $2.1 \times 10^{-5}$ mol/g.

After the addition of 14 kg of methyl ethyl ketone (MEK) to the above hydrophobic colloidal silica, the mixture was then concentrated at 50°C at a circulation flow rate of 50 l/minute and pressure of 1 $kg/cm^2$ using the above ultra filter membrane module and ultra filter membrane to discharge 14 kg of filtrate. This step was repeated five times to prepare 20 kg of hydrophobic colloidal silica dispersed in MEK with a solid content of 30 wt%, water content determined by the Karl Fischer method of 0.3 wt%, methanol content determined by gas chromatography (GC) of 3.2 wt%, and number average particle diameter determined by a dynamic light scattering method of 11 nm. The average permeation flow rate of five times of operation was 70 $kg/m^2$/hour, which required 4 hours. The specific surface area of the resulting hydrophobic colloidal silica dispersed in MEK measured by the BET method was 230 $m^2/g$. The silanol group concentration on the silica particles determined by a methyl red adsorption method was $1.8 \times 10^{-5}$ mol/g. The metal content in the solvent of the hydrophobic colloidal silica dispersed in MEK determined by an atomic absorption method was as low as 0.05 ppm of Na and 0.001 ppm of Ca and K, respectively.

(3) Preparation of colloidal silica dispersed in MEK without using hydrophobizing agent

Comparative Example 1 illustrates an example of the preparation of colloidal silica dispersed in MEK without using a hydrophobizing agent.

Comparative Example 1

14 kg of methyl ethyl ketone (MEK) was added to 20 kg of the colloidal silica dispersed in methanol prepared in the Preparation Example 1 without performing hydrophobization. The mixture was concentrated at 50°C at a circulation flow rate of 50 l/minute and pressure of 1 kg/cm$^2$ using the above ultra filter membrane module and ultra filter membrane to discharge 14 kg of filtrate. This step was repeated five times to prepare 20 kg of colloidal silica dispersed in MEK with a solid content of 30 wt%, water content determined by the Karl Fischer method of 0.3 wt%, methanol content determined by gas chromatography (GC) of 3.2 wt%, and number average particle diameter determined by a dynamic light scattering method of 22 nm. The specific surface area of the resulting colloidal silica dispersed in MEK measured by the BET method was 230 m$^2$/g. The silanol group concentration on the silica particles determined by a methyl red adsorption method was 3.5 x 10$^{-5}$ mol/g.

(4) Preparation of colloidal silica dispersed in MEK by distillation

Comparative Example 2 illustrates an example of the preparation of colloidal silica dispersed in MEK by distillation.

Comparative Example 2

The concentration of water and methanol in the Preparation Example 1 was performed by distillation instead of using an ultrafilter membrane. Specifically, colloidal silica dispersed in water with a solid content of 20% was concentrated to a solid content of 30% by distillation at atmospheric pressure. The solvent was then replaced by distillation while controlling the amount of methanol added to be the same as the amount of distillate. The amount of methanol required until the water content in the colloidal silica was 1.5% as in the Example 1 was 300 kg. This was a rather large amount in comparison with the case of using the ultra filter membrane, which required 84 kg. Adherence of a large amount of aggregate of silica sol was observed on the inner wall of a distillation container. After the addition of 6 kg of trimethylmethoxysilane to 20 kg of the resulting colloidal silica dispersed in methanol, the mixture was hydrophobized while stirring at 60°C for 3 hours. The solvent was replaced by distillation while controlling the amount of methanol added to be the same as the amount of distillate. The temperature inside the container when the methanol content in the colloidal silica was 3.2% as in the Example 1 was 76°C and the amount of MEK added was 33 kg. Water content determined by the Karl Fischer method was approximately the same as that in the Example 1. Adherence of a large amount of aggregate of silica sol was observed on the inner wall of the distillation container. The resulting solution of the hydrophobic colloidal silica dispersed in MEK was treated using the above ultra filter membrane as in Example 1. The metal content in the permeation liquid determined by an atomic absorption method was approximately the same as that in the raw material colloidal silica dispersed in water.

(5) Evaluation of product characteristics

A solution in which 60 g of tricyclodecanedimethanol diacrylate which is a hydrophobic organic compound (hereinafter may be referred to as "hydrophobic acrylate") was added to 133 g (solid content: 40 g) of the resulting hydrophobic colloidal silica dispersed in MEK was prepared. As a comparative solution, a solution in which 60 g of tricyclodecanedimethanol diacrylate (hydrophobic acrylate) was added to 133 g (solid content: 40 g) of colloidal silica dispersed in methanol provided with no hydrophobization was prepared. The solutions were concentrated at 40°C and 100 mmHg under reduced pressure using a rotary evaporator until the flowability of the solution disappeared or the solvent was completely removed. Dispersion stability was evaluated by wt% of the hydrophobic acrylate in the dispersion medium, flowability by naked eye observation (solution which flowed when tilted was evaluated as "Good", solution which did not flow was evaluated as "Bad"), viscosity at 25°C (measured by using a rotational viscometer B8H manufactured by TOKIMEC Co., Ltd., revolution per minute; 50, rotor; HHM3), and transparency by naked eye observation.
The resulting hydrophobic colloidal silica dispersed in MEK was allowed to stand in an airtight container at 50°C for one month. Long-term storage stability was evaluated by the presence or absence of coloration and precipitation of particles by naked eye observation, the presence or absence of the increase in the particle diameter by a dynamic light scattering method, and the presence or absence of the increase in the viscosity.
The preparation steps in Example 1 and Comparative Examples 1 and 2, and the results of evaluation of product characteristics are shown in Table 1.

## Table 1

| | Example 1 | Comparative Example 1 | Comparative Example 2 |
|---|---|---|---|
| **Preparation step** | | | |
| hydrophobization | Provided | Not provided | Provided |
| Method of replacing the solvent | Ultra filter membrane | Ultrafiltre membrane | Distillation |
| Major dispersion medium | MEK* | MEK* | MEK* |
| **Evaluation of Product characteristics** | | | |
| Metal content(ppm) | | | |
| Na | 0.05 | 0.05 | 4.6 |
| Ca | 0.001 | 0.001 | 0.013 |
| K | 0.001 | 0.001 | 0.011 |
| Dispersion stability | | | |
| Hydrophobic acrylate in dispersion medium (wt%) | 97 | 79 | 97 |
| Flowability | Good | Bad | Good |
| Viscosity (cps) | 1100 | Could not be evaluated | 1300 |
| Transparency | Good | Bad | Good |
| Long-term storage stability | | | |
| Coloration | None | None | Observed (yellow) |
| Precipitation of particles | None | Observed (after 1 week) | None |
| Increase in particle diameter | None | Observed (after 3 days) | None |
| Increase in viscosity | None | Increased | None |

* MEK: methyl ethyl ketone

EP 1 252 095 B1

As is clear from Table 1, the dispersion liquid using the hydrophobic colloidal silica dispersed in MEK obtained in Example 1 and Comparative Example 2 exhibited good dispersibility in a hydrophobic organic medium.

On the contrary, the dispersion liquid using the colloidal silica dispersed in MEK obtained in Comparative Example 1 that was not hydrophobized exhibited inferior dispersibility.

The hydrophobic colloidal silica dispersed in MEK obtained in Example 1 exhibited good long-term storage stability.

On the contrary, the dispersion liquid using the colloidal silica dispersed in MEK obtained in Comparative Examples 1 and 2 exhibited inferior long-term storage stability.

As described above, according to the present invention, a method of manufacturing colloidal silica which exhibits good dispersibility in an organic solvent, an organic resin, a paint containing an organic solvent or resin, or the like, is stable for a long period of time in a medium containing a hydrophobic organic solvent as a major component, and has a low metal impurity content under mild conditions can be provided.

**Claims**

1. A method for manufacturing hydrophobic colloidal silica comprising the following steps:

    (a) taking a colloidal silica dispersed in an aqueous dispersant
    (b) replacing 80-99.9% of the aqueous dispersant with one or more hydrophilic organic solvent(s)
    (c) preparing hydrophobic colloidal silica by reacting the colloidal silica with an hydrophobizing agent
    (d) replacing the liquid phase of the dispersion comprising the organic hydrophilic solvent with one or more hydrophobic organic solvent(s) to obtain hydrophobic colloidal silica dispersed in a hydrophobic organic solvent.

2. The method according to claim 1, wherein 90-99.9 % of the aqueous dispersant is replaced by the hydrophilic organic solvent(s).

3. The method for manufacturing hydrophobic colloidal silica according to claim 1 or 2, wherein the hydrophobizing agent comprises a hydrolyzable silicon compound having at least one alkoxy group in the molecule or a hydrolyzate thereof.

4. The method according to any one of claims 1 or 2, wherein the hydrophobizing agent comprises a hydrolyzable silicon compound represented by the following formula (1):

$$(R^1O)_m(R^2)_{3-m}Si\text{-}(\text{-O-SiMe}_2\text{-})_p\text{-}(O)_q\text{-}R^3 \tag{1}$$

wherein $R^1$ represents an alkyl group having 1-4 carbon atoms, $R^2$ and $R^3$ individually represent an alkyl group having 1-12 carbon atoms, Me represents a methyl group, m is an integer from 0 to 3, p is an integer from 0 to 50, q is 0 or 1 and m+q is between 1 and 4.

5. The method according to claim 4, wherein the hydrolyzable silicon compound is trimethylmethoxysilane, tributyl-methoxysilane, or $\alpha$-trimethylsilyl-$\omega$-dimethylmethoxysilyl-polydimethylsiloxane.

6. The method according to any one of claims 1 or 2, wherein the hydrophilic organic solvent of the colloidal silica is an alcohol.

7. The method according to claim 6, wherein the hydrophilic organic solvent is methanol.

8. The method according to any one of claims 1 or 2, wherein the hydrophobic organic solvent contains at least one solvent selected from the following groups: ketones, esters, ethers or aromatic hydrocarbons.

9. The method according to claim 8, wherein the hydrophobic organic solvent is methyl ethyl ketone and/or methyl isobutyl ketone.

10. The method according to any one of claims 1 or 2, wherein the amount of hydrophilic organic solvent(s) after step (d) is between 0.1 - 10.0 wt.%.

**11.** The method according to any one of claims 1 or 2, wherein the solvent replacement under steps b. and d. is achieved using an ultrafilter membrane.

**Patentansprüche**

**1.** Verfahren zur Herstellung von hydrophobem kolloidalen Silica, umfassend die folgenden Schritte:

(a) Nehmen eines kollodialen Silicas, dispergiert in einem wässrigen Dispersionsmittel,
(b) Ersetzen von 80 bis 99,9 % des wässrigen Dispersionsmittels durch ein oder mehrere hyrophile organische Lösungsmittel,
(c) Herstellen von hydrophobem kolloidalen Silica durch Umsetzen des kolloidalen Silicas mit einem Hydrophobisierungsmittel,
(d) Ersetzen der flüssigen Phase der Dispersion, umfassend das organische hydrophile Lösungsmittel, durch ein oder mehrere hydrophobe organische Lösungsmittel unter Erhalten von hydrophobem kolloidalen Silica, dispergiert in einem hydrophoben organischen Lösungsmittel.

**2.** Verfahren nach Anspruch 1, wobei 90 bis 99,9 % des wässrigen Dispersionsmittels durch das bzw. die hydrophile (n) organische(n) Lösungsmittel(n) ersetzt werden.

**3.** Verfahren zur Herstellung von hydrophobem kolloidalen Silica nach Anspruch 1 oder 2, wobei das Hydrophobisierungsmittel eine hydrolysierbare Siliciumverbindung mit mindestens einer Alkoxygruppe in dem Molekül oder ein Hydrolysat davon umfasst.

**4.** Verfahren nach einem der Ansprüche 1 oder 2, wobei das Hydrophobisierungsmittel eine hydrolysierbare Siliciumverbindung, dargestellt durch die folgende Formel (1):

$$(R^1O)_m(R^2)_{3-m}Si\text{-}(\text{-O-SiMe}_2\text{-})_p(O)_q\text{-}R^3 \qquad (1)$$

worin $R^1$ einen Alkylrest mit 1 bis 4 Kohlenstoffatomen darstellt, $R^2$ und $R^3$ jeweils einen Alkylrest mit 1 bis 12 Kohlenstoffatomen darstellen, Me eine Methylgruppe darstellt, m eine ganze Zahl von 0 bis 3 ist, p eine ganze Zahl von 0 bis 50 ist, q 0 oder 1 ist und m + q zwischen 1 und 4 liegt, umfasst.

**5.** Verfahren gemäß Anspruch 4, wobei die hydrolysierbare Siliciumverbindung Trimetylmethoxysilan, Tributylmethoxysilan oder $\alpha$-Trimethylsilyl-$\bar{\omega}$-dimethylmethoxysilyl-polydimethylsiloxan ist.

**6.** Verfahren nach einem der Ansprüche 1 oder 2, wobei das hydrophile organische Lösungsmittel für das kolloidale Silica ein Alkohol ist.

**7.** Verfahren nach Anspruch 6, wobei das hydrophile organische Lösungsmittel Methanol ist.

**8.** Verfahren nach einem der Ansprüche 1 oder 2, wobei das hydrophobe organische Lösungsmittel mindestens ein Lösungsmittel, ausgewählt aus den folgenden Gruppen: Ketonen, Ester, Ether oder aromatische Kohlenwasserstoffe, enthält.

**9.** Verfahren nach Anspruch 8, wobei das hydrophobe organische Lösungsmittel Methylethylketon und/oder Methylisobutylketon ist.

**10.** Verfahren nach einem der Ansprüche 1 oder 2, wobei die Menge an hydrophilem organischen Lösungsmittel bzw. hydrophilen organischen Lösungsmitteln nach Schritt (d) zwischen 0,1 bis 10,0 Gew.-% beträgt.

**11.** Verfahren nach einem der Ansprüche 1 oder 2, wobei der Lösungsmittelersatz in den Schritten b. und d. unter Verwendung einer Ultrafiltrationsmembran erreicht wird.

**Revendications**

1. Procédé pour fabriquer une silice colloïdale hydrophobe comprenant les étapes suivantes consistant à :

   (a) prendre une silice colloïdale dispersée dans un dispersant aqueux ;
   (b) remplacer 80 à 99,9% du dispersant aqueux par un ou plusieurs solvants organiques hydrophiles ;
   (c) préparer une silice colloïdale hydrophobe en faisant réagir la silice colloïdale avec un agent hydrophobant ;
   (d) remplacer la phase liquide de la dispersion comprenant le solvant hydrophile organique par un ou plusieurs solvants organiques hydrophobes pour obtenir une silice colloïdale hydrophobe dispersée dans un solvant organique hydrophobe.

2. Procédé selon la revendication 1, dans lequel 90 à 99,9% du dispersant aqueux est remplacé par le ou les solvants hydrophiles organiques.

3. Procédé pour fabriquer une silice colloïdale hydrophobe selon la revendication 1 ou 2, dans lequel l'agent hydrophobant comprend un composé du silicium hydrolysable ayant au moins un groupe alcoxy dans la molécule ou un hydrolysat de celui-ci.

4. Procédé selon l'une quelconque des revendications 1 ou 2, dans lequel l'agent hydrophobant comprend un composé du silicium hydrolysable représenté par la formule suivante (1) :

$$(R^1O)_m(R^2)_{3-m}Si\text{-}(\text{-O-SiMe}_2\text{-})_p\text{-}(O)_q\text{-}R^3 \tag{1}$$

   dans laquelle $R^1$ représente un groupe alkyle ayant 1 à 4 atomes de carbone, $R^2$ et $R^3$ représentent individuellement un groupe alkyle ayant 1 à 12 atomes de carbone, Me représente un groupe méthyle, m est un nombre entier valant de 0 à 3, p est un nombre entier valant de 0 à 50, q vaut 0 ou 1 et m+q vaut entre 1 et 4.

5. Procédé selon la revendication 4, dans lequel le composé du silicium hydrolysable est le triméthylméthoxysilane, le tributylméthoxysilane ou l'$\alpha$-triméthylsilyl-$\omega$-diméthylméthoxysilyl-polydiméthylsiloxane.

6. Procédé selon l'une quelconque des revendications 1 ou 2, dans lequel le solvant organique hydrophile de la silice colloïdale est un alcool.

7. Procédé selon la revendication 6, dans lequel le solvant organique hydrophile est le méthanol.

8. Procédé selon l'une quelconque des revendications 1 ou 2, dans lequel le solvant organique hydrophobe contient au moins un solvant choisi parmi les groupes suivants : les cétones, les esters, les éthers ou les hydrocarbures aromatiques.

9. Procédé selon la revendication 8, dans lequel le solvant organique hydrophobe est la méthyléthylcétone et/ou la méthylisobutylcétone.

10. Procédé selon l'une quelconque des revendications 1 ou 2, dans lequel la quantité de solvant(s) hydrophile(s) organique(s) après l'étape (d) est de 0,1 à 10,0% en poids.

11. Procédé selon l'une quelconque des revendications 1 ou 2, dans lequel le remplacement des solvants dans les étapes b. et d. est réalisé en utilisant une membrane d'ultrafiltration.